# EUROPEAN PATENT SPECIFICATION

(11) **EP 1 244 259 B1**
(45) Date of publication and mention of the grant of the patent: **28.09.2011**
(21) Application number: 01999091.0
(22) Date of filing: 03.12.2001
(51) Int. Cl.: H04L 12/58, G06F 13/00

(54) **MAIL SYSTEM, SERVER AND MAIL TRANSMITTING/RECEIVING DEVICE**
NACHRICHTENSYSTEM, SERVER UND NACHRICHTENSENDE/-EMPFANGSGERÄT
SYSTEME DE COURRIER ELECTRONIQUE, SERVEUR DE COURRIER ELECTRONIQUE ET DISPOSITIF D'EMISSION/DE RECEPTION DE COURRIER ELECTRONIQUE

(30) Priority: 01.12.2000 JP 2000367660
(43) Date of publication of application: 25.09.2002
(73) Proprietor: NTT DoCoMo, Inc., Tokyo 100-6150 (JP)
(72) Inventor: YABE, Toshiyasu, Chiba-shi, Chiba 263-0024 (JP); TAKEDA, Yuki, Yokohama-shi, Kanagawa 232-0015 (JP); SOGA, Makoto, Chuo-ku, Tokyo 104-0041 (JP); NAGANO, Koyuki, Nerima-ku, Tokyo 176-0023 (JP)
(74) Representative: HOFFMANN EITLE
(86) International application number: PCT/JP2001/010534
(87) International publication number: WO 2002/045365

(56) References cited:
- EP-A2- 0 838 962
- WO-A2-99/61966
- JP-A- 10 063 590
- JP-A- 11 239 170
- US-A- 5 790 790
- ARBANOWSKI S ET AL: "Service personalization for unified messaging systems" COMPUTERS AND COMMUNICATIONS, 1999. PROCEEDINGS. IEEE INTERNATIONAL SY MPOSIUM ON RED SEA, EGYPT 6-8 JULY 1999, LOS ALAMITOS, CA, USA,IEEE COMPUT. SOC, US, 6 July 1999 (1999-07-06), pages 156-163, XP010555030 ISBN: 978-0-7695-0250-2
- NOBUHIRO HYOUDOU: 'Keitai denwa de honkakutekina mail soujushin wo! J-PHONE ga sky walker service kaishi e' MOBILE MEDIA MAGAZINE vol. 5, no. 12, 13 November 1997, pages 34 - 35, XP002951086
- 'Mobile computing no iriguchi ni! Short message ni chuuryoku suru idou carrier' MOBILE MEDIA MAGAZINE no. 27, 13 August 1997, pages 32 - 35, XP002951087

## Description

### Technical Field

The present invention relates to an email system, a server, and an email transmitting and receiving apparatus for transmitting email receipts from receivers of emails to transmitters of the emails.

### Background Art

A method for transmitting email receipts is widely known; wherein, an email when transmitted by a transmitting side, is received and opened by the receiving side of the email; and a notice of an email receipt, which indicates that the email has been received by the receiving side, is transmitted by the receiving side of the email to the transmitting side of the email. Through the notice of the email receipt, the user who transmitted the email can be made known that the receiver of the email has read the contents of the email.

In the above-mentioned email system, the notice of an email receipt (referred to as 'email receipt' hereinafter) is transmitted in an ordinary email format. However, in some cases, it is not necessary for email receipts to be transmitted immediately, such as in routine emails. In other words, users of the email system need to receive routine emails without any delay, but they often do not have the need to receive email receipts immediately for emails sent to others.

In certain other cases, users of the email system do not feel the need to receive email receipts as and when a recipient reads an email, in other words, in real time; and may find it more convenient to check several email receipts together at a time, rather than individual email receipts.

However, in the conventional email system, email receipts are processed without distinguishing ordinary emails from others. Therefore, the conventional email system is not able to meet the users' varied needs for email receipts of various transmitted emails.

In addition to this, US 5,790,790 A discloses a system for electronic document distribution. In particular, it is disclosed a system in which a server sends a notification to an intended recipient of a document such to notify the recipient that the respective document is available for download. In this system, the recipient can then download the document from the server using so-called local protocols. Further, in this system, the notifications to the recipient can be effected in form of e-mails. However, the disclosed system does not consider dedicated e-mail receipts in that it solely relies on so-called so-called "returned e-mail messages" that indicate that the sending of an e-mail notification has failed.

Still further, WO 99/63709 discloses pushing messages from a particular sender, whereas always suppressing redirection of message seal receipts.

### Disclosure of the Invention

The present invention has been made in the light of the above-mentioned drawbacks of the prior art, and it is an object of the present invention to provide an email system with a notification function of email receipts, which can meet the varied needs of the users of the email system.

The aforementioned problems are solved by the subject-matter of the independent claims. Further preferred embodiments are defined in the dependent claims.

A mail system may comprise: a plurality of email client devices, which transmit and receive emails; a first storage means, which stores emails addressed to recipient email client devices which are recipients of the emails; a second storage means, which stores information concerning email receipts addressed to transmitter email client devices which are transmitters of the emails; an email transmitting means, which transmits the emails stored by the first storage means to the recipient email client devices, without waiting for operations of transmitting the emails to be carried out by users of the recipient email client devices, and; an email receipt transmitting means, which transmits the information concerning the email receipts stored by the second storage means to the transmitter email client devices, in response to requests which are transmitted by the transmitter email client devices following operations carried out by users of the transmitter email client devices.

According to the present invention, recipient email client devices can obtain emails addressed to them immediately; and on the other hand, transmitter email client devices of emails can obtain their email receipts as and when they want to receive email receipts. This is a first mode of an email system.

In the second mode of an email system, in addition to the characteristics of the first mode, the email receipt transmitting means may transmit the information concerning the email receipts in an email format to the transmitter email client devices.

In the third mode of an email system, in addition to the characteristics of the first mode, the email receipt transmitting means may transmit the information concerning the email receipts in a data format that can be interpreted by a browser program stored by the transmitter email client devices.

In the fourth mode of an email system, in addition to the characteristics of the first mode, the second storage means and the email receipt transmitting means may be installed in a server, which is equipped with the first storage means and the email transmitting means to provide a service of email distribution through a communication network to which the email client devices are connected.

In the fifth mode of an email system, in addition to the characteristics of the first mode, the email client devices may be mobile stations connected to a mobile communication network; the email transmitting means may transmit the emails to recipient mobile stations which are recipients of the emails through the mobile communication network, and; the email receipt transmitting means may transmit the information concerning the email receipts to transmitter mobile stations which are transmitters of the emails through the mobile communication network.

In the sixth mode of an email system, in addition to the characteristics of the first mode, the first storage means and the email transmitting means may be installed in an email server, which provides a service of email distribution through a first communication network to which the email client devices are connected, and; the second storage means and the email receipt transmitting means may be installed in an email receipt server connected to a second communication network, which is different from the first communication network.

In the seventh mode of an email system, in addition to the characteristics of the sixth mode, the first communication network may be a mobile communication network; the recipient email client devices are mobile stations connected to the mobile communication network, and; the email transmitting means may transmit the emails to the mobile stations through the mobile communication network.

In the eighth mode of an email system, in addition to the characteristics of the sixth mode, the second communication network may be the Internet, and; the email receipt transmitting means may transmit the information concerning the email receipts to the transmitter email client devices through the Internet.

In the ninth mode of an email system, in addition to the characteristics of the sixth mode, the first communication network may be a mobile communication network; the recipient email client devices may be mobile stations connected to the mobile communication network; the second communication network may be the Internet; the email transmitting means may transmit the emails to the mobile stations through the mobile communication network, and; the email receipt transmitting means may transmit the information concerning the email receipts to the transmitter email client devices through the Internet.

In the tenth mode of an email system, in addition to the characteristics of the sixth mode, each of the transmitter email client devices may comprise a means for indicating an address of the email receipt server in the second communication network as a destination address for email receipts corresponding to emails, which each of the transmitter email client devices transmits.

Further, a server may relay communications of emails transmitted and received between email client devices, and it comprises a receiving means, which receives email receipts addressed to transmitter email client devices which are transmitters of the emails; a storage means, which stores information concerning the email receipts which are received, with correspondence to identification information of each of the transmitter email client devices; an extracting means, which extracts the information concerning the email receipts stored by the storage means according to the identification information, in response to requests which are transmitted by the transmitter email client devices following operations carried out by users of the transmitter email client devices, and; an email receipt transmitting means, which transmits the information concerning the email receipts extracted by the extracting means, to the transmitter email client devices. This is a first mode of a server.

In the second mode of the server, in addition to the characteristics of the first mode, the email receipt transmitting means may transmit the information concerning the email receipts in an email format to the transmitter email client devices.

In the third mode of a server, in addition to the characteristics of the first mode, the email receipt transmitting means may transmit the information concerning the email receipts in a data format that can be interpreted by a browser program stored by the transmitter email client devices, to the transmitter email client devices.

In the fourth mode of a server, in addition to the characteristics of the first mode, the transmitter email client devices may be mobile stations connected to a mobile communication network, and; the email receipt transmitting means may transmit the information concerning the email receipts to the mobile stations through the mobile communication network.

Moreover, another server may comprise a receiving means, which receives email receipts addressed to transmitter email client devices which transmit emails; a storage means, which stores information concerning the email receipts which are received, with correspondence to identification information of each of the transmitter email client devices; an extracting means, which extracts the information concerning the email receipts stored by the storage means according to the identification information, in response to requests which are transmitted by the transmitter email client devices following operations carried out by users of the transmitter email client devices, and; an email receipt transmitting means, which transmits the information concerning the email receipts extracted by the extracting means, to the transmitter email client devices; and the server is connected to a second communication network, which is different from a first communication network to which an email server for providing a service of email distribution and the transmitter email client devices are connected. This is a first mode of another server.

In the second mode of another server, in addition to the characteristics of the first mode, the first communication network may be a mobile communication network, and; the transmitter email client devices may be mobile stations connected to the mobile communication network.

In the third mode of another server, in addition to the characteristics of the first mode, the second communication network may be the Internet.

In the fourth mode of another server, in addition to the characteristics of the first mode, the first communication network may be a mobile communication network; the second communication network may be the Internet, and; the transmitter email clients may be mobile stations connected to the mobile communication network.

Further, an email transmitting and receiving apparatus may use a service of email distribution provided by an email server, and the apparatus comprises an indicating means, which indicates an address of a server, which is different from the email server, in a communication network as a destination address for email receipts corresponding to emails, which the apparatus transmits.

### Brief Description of the Drawings

Fig.1 is a block diagram showing the overall configuration of a system according to the first embodiment of the present invention.
Fig.2 is a block diagram showing the configuration of a mobile station according to the first embodiment of the present invention.
Fig.3 is a block diagram showing an email server according to the first embodiment of the present invention.
Fig.4 is a format chart showing an example of data storage in an email storage unit of an email server according to the first embodiment of the present invention.
Fig.5 is a format chart showing an example of data storage in an email receipt storage unit of an email server according to the first embodiment of the present invention.
Fig.6 is a sequence chart showing a series of operations for a mobile station to transmit an email and for an email server to store an email receipt corresponding to the email according to the first embodiment of the present invention.
Fig.7 is a sequence chart showing a series of operations for a mobile station to receive an email receipt, which is stored in an email server according to the first embodiment of the present invention.
Fig.8 is a block diagram showing the overall configuration of a system according to the second embodiment of the present invention.
Fig.9 is a sequence chart showing a series of operations for a mobile station to transmit an email and for an email receipt server to store an email receipt corresponding to the email according to the second embodiment of the present invention.
Fig. 10 is a sequence chart showing a series of operations for a mobile station to receive an email receipt, which is stored in an email receipt server according to the second embodiment of the present invention.

### Best Mode for Carrying out the Invention

In the following paragraphs, embodiments of the present invention, where an overall system is applied to a mobile communication network, are explained with reference to drawings. The embodiments are examples, and it will be readily understandable that the present invention is open to a variety of modifications within its technical scope, and the following embodiments should not be interpreted as limiting the scope of the invention.

### A: The First Embodiment

### A-1: Configuration

First, a configuration of a particular system of the first embodiment will be explained below.

### (1) Overall configuration of the email system

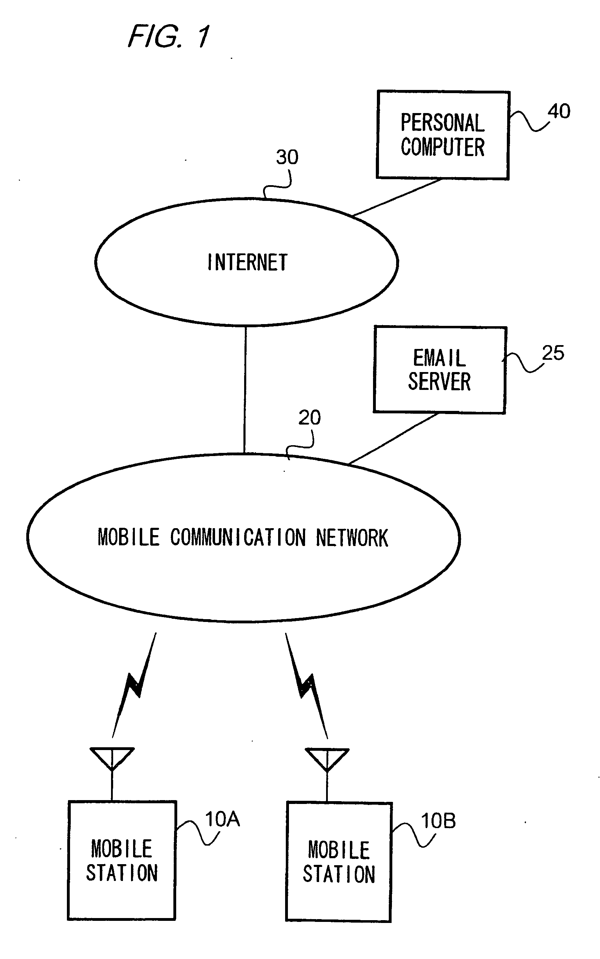

Fig. 1 is a block diagram showing the overall configuration of a system according to the first embodiment. As shown in Fig.1, the system contains mobile stations 10A and 10B, mobile communication network 20, email server 25, Internet 30, and personal computer 40 (referred to as 'PC 40' hereinafter).

Mobile stations 10A and 10B are wireless communication terminals such as mobile phones and Personal Handy-phone Systems (PHSs), and they can execute data communication and voice communication through mobile communication network 20. Each of the mobile stations 10A and 10B stores an email address, which is allotted to it for transmitting and receiving emails, and it functions as an email client, which transmits and receives emails. Since mobile station 10A and mobile station 10B have the same configuration and functions, they are referred to as just 'mobile stations 10' hereafter, if there is no need to distinguish them from each other.

Mobile communication network 20 is a communication network, which provides mobile stations 10 with data communication service and voice communication service. Mobile communication network 20 contains base stations (not shown), switching stations (not shown), communication cables, which interconnect these stations (not shown), and so on. Mobile communication network 20 is connected to Internet 30 through a gateway device (not shown). There are many base stations set up with a certain interval between one another in mobile communication network 20, and each of the base stations executes wireless communication with mobile stations 10, which are in a wireless cell allotted to each base station. Each of the switching stations communicates with many of the base stations, and switches communication circuits for mobile stations 10 in the wireless cells of the base stations.

PC 40 is connected to Internet 30, and functions as an email client, which transmits and receives emails through Internet 30. For this purpose, PC 40 stores an email address, which is allotted to it. PC 40 comprises a display unit (not shown) for displaying various kinds of information such as email messages, a keyboard (not shown) by which a user of PC 40 composes emails, and so on, a communication unit (not shown) for executing data communication through Internet 30, a control unit (not shown) for controlling overall operations of PC 40, and so on.

Email server 25 is connected to mobile communication network 20, and relays email communication between email clients, namely, between mobile station 10A and mobile station 10B; or between one of mobile stations 10A/10B and PC 40.

### (2) Configuration of mobile station 10

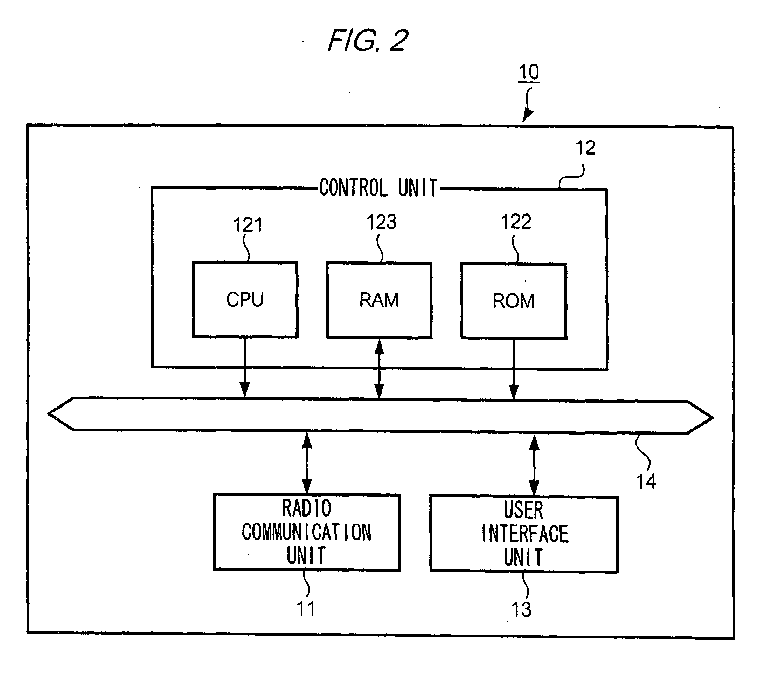

Next, the configuration of mobile station 10 is described below with reference to the diagram in Fig.2. As shown in Fig.2, mobile station 10 comprises radio communication unit 11, control unit 12, user interface unit 13, and bus 14, which interconnects these units.

Radio communication unit 11 comprises an antenna (not shown), communication control circuits (not shown), and so on, and executes wireless communication with the base station of mobile communication network 20. User interface unit 13 comprises a liquid crystal display unit (not shown) for displaying various kinds of information such as messages of emails, a keypad (not shown) by which a user of mobile station 10 makes calls, composes emails, and so on, a microphone and a speaker (not shown) by which a user of mobile station 10 is able to carry out voice communication.

Control unit 12 controls operations of each of the components of mobile station 10, and it comprises central processing unit (CPU) 121, read only memory (ROM) 122, and random access memory (RAM) 123. ROM 122 stores several kinds of programs such as control programs. CPU 121 reads out the control programs from ROM 122 and executes various kinds of control operations. During the control operations of CPU 121, RAM 123 is used as the work area for the programs, and so on. The control programs, which are stored in ROM 122, contain a mailer program for making, transmitting, and receiving emails, as well as a voice communication program for providing voice communication function to mobile station 10. Details of operations, which CPU 121 executes in accordance with the mailer program, are explained in the latter part of this description.

### (3) Configuration of email server 25

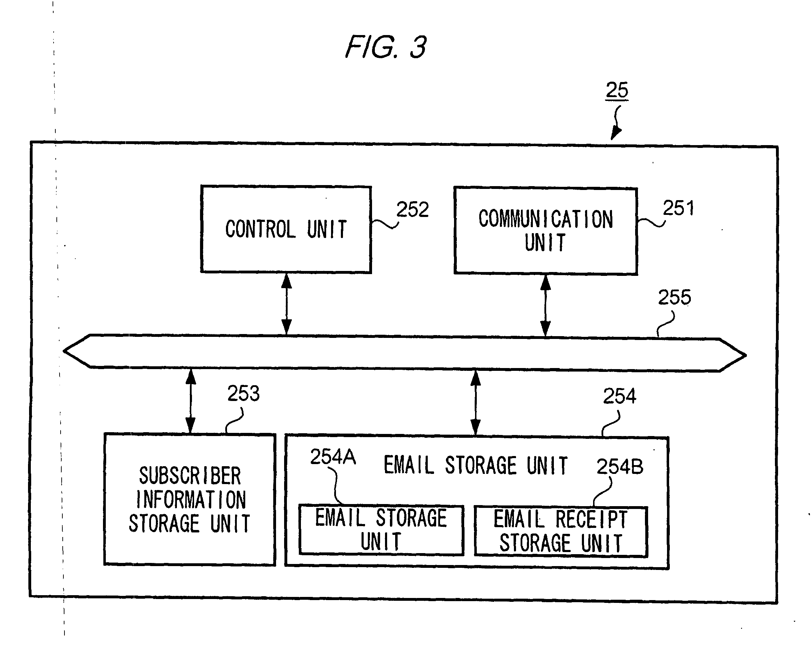

Next, the configuration of email server 25 is explained below with reference to the block diagram in Fig.3. As shown in Fig.3, email server 25 comprises communication unit 251, control unit 252, subscriber information storage unit 253, email storage unit 254, and bus 255, which interconnects these units.

Communication unit 251 comprises a connection interface (not shown) for connecting to mobile communication network 20, communication control circuits (not shown), and so on, and it executes data communication through mobile communication network 20.

Control unit 252 comprises a CPU (not shown), a ROM (not shown), and a RAM (not shown), and it controls each unit of email server 25. The ROM stores several kinds of programs such as control programs. The CPU reads out the control programs from the ROM and executes various kinds of control operations. The control programs, which are stored in the ROM, contain, for example, an email relay program for relaying emails, which are communicated between email clients. Details of operations, which the CPU executes, in accordance with the email relay program, are explained in the latter part of this description.

Subscriber information storage unit 253 is a mass storage device such as a hard disk, and it stores information concerning subscribers of the data communication service in mobile communication network 20, such as telephone numbers and email addresses of mobile stations 10. Control unit 252 makes a call to mobile station 10 and transmits emails using the telephone numbers and the email addresses, which are stored in subscriber information storage unit 253.

Email storage unit 254 is a mass storage device such as a hard disk, and stores emails, which are addressed to mobile stations 10. Email storage unit 254 has two storage areas, namely, email storage unit 254a for storing emails addressed to mobile stations 10, and email receipt storage unit 254b for storing email receipts for mobile stations 10.

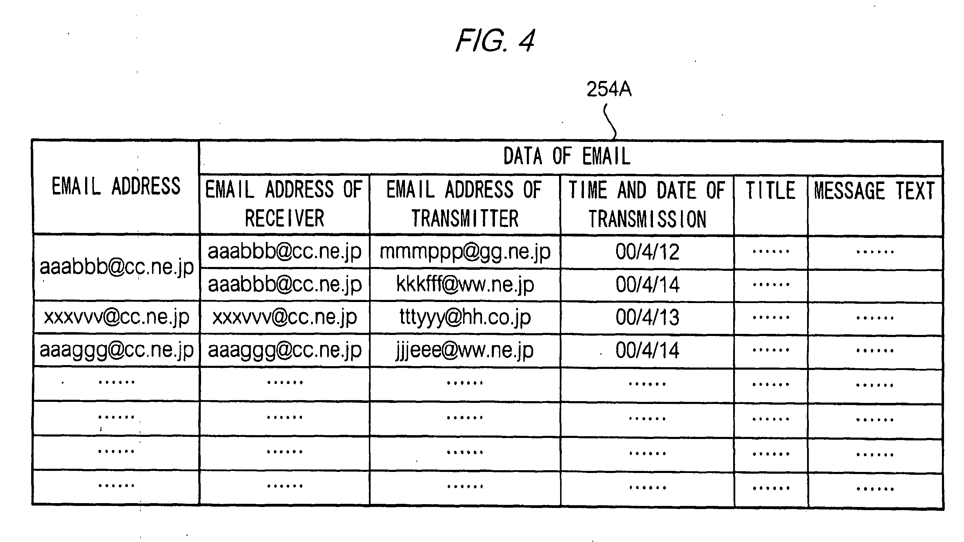

Email storage unit 254a comprises many memory areas, called mailboxes, and each mobile station 10 is allotted a mailbox. When control unit 252 receives an email, addressed to mobile station 10, it temporarily stores the email data of the received email in a mailbox in email storage unit 254a, which corresponds to the receiver's email address of the email. The email data contain email addresses of the receivers of the email, email addresses of the sender of the email, the transmission time and date of the email, a title of the email, and a text message of the email. Fig.4 is a format chart showing an example of data storage in email storage unit 254a. After control unit 252 stores the email data of the received email in the corresponding mailbox as mentioned above, it makes a call to one of mobile stations 10, which is a receiver of the email, and transmits the stored email to another of mobile stations 10.

Emails, which are stored in email storage unit 254a (referred to as 'ordinary emails' hereinafter), are not emails of email receipts addressed to mobile stations 10. Email receipts are also transmitted and received in an email format, but they are distinguishable from ordinary emails and stored in email receipt storage unit 254b.

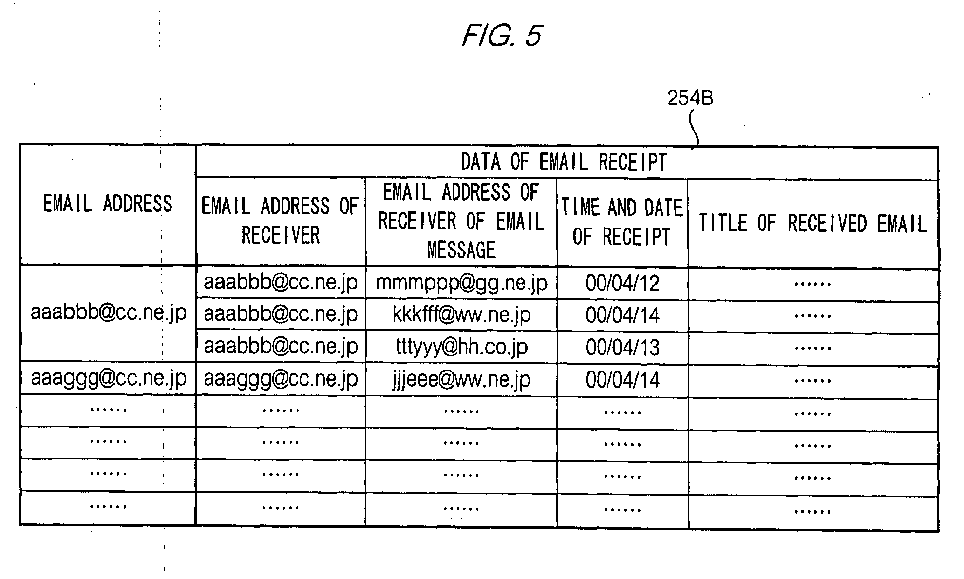

Fig.5 is a format chart showing an example of data storage in email receipt storage unit 254b. As shown in Fig.5, email receipt storage unit 254b stores data of email receipts addressed to mobile stations 10, and the data of email receipts are sorted by email addresses of mobile stations 10. Data of email receipts contain an email address of the receiver of the email receipt, an email address of the receiver of the received email, the receipt time and date at which the email is received, and a title of the received email. When control unit 252 receives an email receipt, which is addressed to mobile station 10, it stores the email receipt in email receipt storage unit 254a according to the email address, which shows the receiver of the email receipt. Then control unit 252 extracts email receipts corresponding to mobile station 10, in response to a request for email receipts, which is sent from mobile station 10 through a request operation carried out by its user and transmits the email receipts to mobile station 10. Namely, email receipts, which are stored in email receipt storage unit 254b, are not transmitted to mobile stations 10 immediately when they are received and are stored by email server 25 as ordinary emails as mentioned above (in a push type distribution method), until users of mobile stations 10 make a request for them. And when email receipts are requested, they are transmitted to mobile stations 10 (in a pull type distribution method).

As explained above, in the first embodiment, ordinary emails as well as email receipts are transmitted and received by email clients in the email format, but email server 25 carries out different processes of delivery for both. In this embodiment, when an email client transmits an email, the email client attaches distinction data to the email data of the email on the basis of which, email server 25 is able to distinguish ordinary emails from email receipts.

### A-2: Operation

Next, operations of the system of the first embodiment with the above-mentioned configuration will be explained. As mentioned above, in the first embodiment, the operation of transmitting ordinary emails from email server 25 to mobile stations 10, and the operation of transmitting email receipts from email server 25 to mobile stations 10 are different from each other. In email server 25 the operation used for transmitting ordinary emails is the same as the operation in the conventional system, hence, an explanation of the transmitting operation is omitted in this description. Following is an example of an email receipt transmission operation, which is carried out when mobile station 10 transmits emails to PC 40 and mobile station 10 receives email receipts corresponding to the emails.

### (1) Operation of transmission of emails by mobile station 10 and operation of storage of email receipts by email server 25

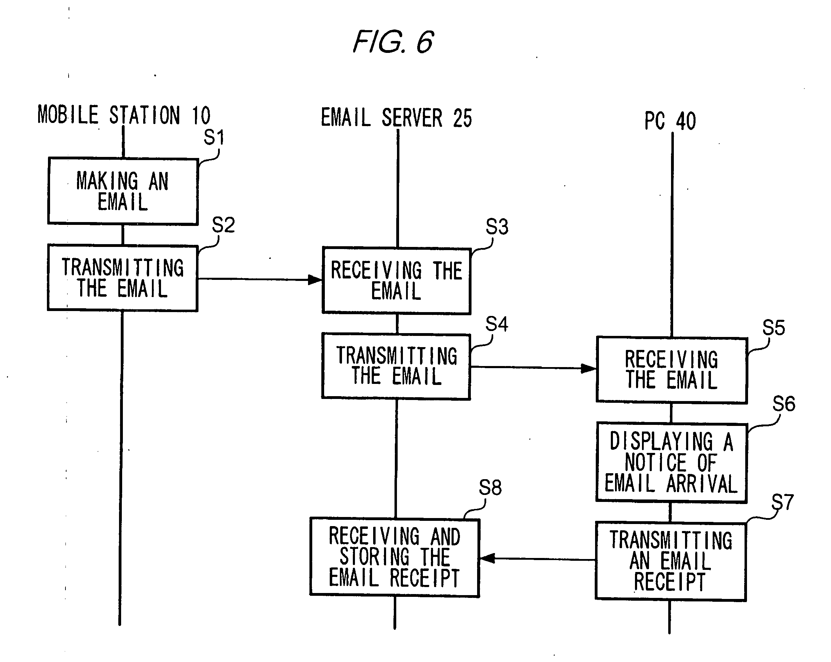

A series of operations, which start when an email is transmitted by mobile station 10, and end when an email receipt transmitted by PC 40 corresponding to the email received from mobile station 10 is stored in email server 25, are explained below with reference to Fig.6. A user of mobile station 10 operates the keypad and starts the mailer program. Then, the user operates the keypad and composes an email, which is addressed to the email address of PC 40. Mobile station 10 prepares an email following the key operation of the user (step S1).

Next, mobile station 10 makes a call to email server 25 following the user's request for transmission of the composed email, and transmits the email, which is addressed to PC 40, to email server 25 (step S2).

Email server 25 receives the email from mobile station 10 (step S3), and transmits the email to PC 40 through mobile communication network 20 and Internet 30 (step S4).

PC 40 receives the email from email server 25 (step S5), and displays a notice of email arrival in the display unit (not shown) to indicate that an email has arrived (step S6).

Next, when the user of PC 40 operates to open the email, PC 40 displays the email in the display unit following the user's operation, and at the same time, it transmits an email receipt, which is addressed to the email address of mobile station 10, to Internet 30 (step S7). As explained above, when the email receipt is transmitted, distinction data for distinguishing email receipts are attached to the data of the email receipt.

Email server 25 receives the email receipt through Internet 30 and mobile communication network 20, and recognizes that it is not an ordinary email but an email receipt after checking the attached distinction data. Then email server 25 stores the email receipt in a memory area in memory 254b in accordance with the email address of mobile station 10, which is the receiver of the email receipt, and ends the series of operations (step S8).

### (2) Operation of download of email receipts by mobile station 10 from email server 25

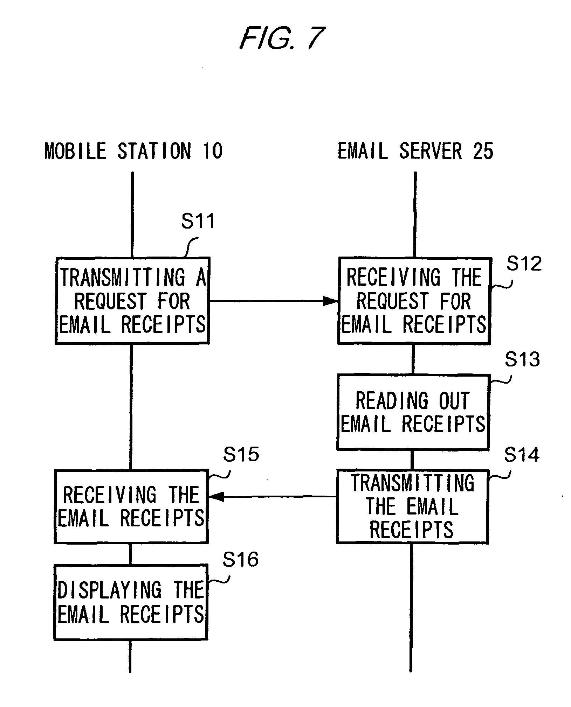

A series of operations, when mobile station 10 downloads email receipts from email server 25, are explained below with reference to Fig.7. First, a user of mobile station 10 operates the keypad of mobile station 10 and starts the mailer program at his/her convenient timing. Then, the user operates the keypad to download email receipts. Following the keypad operation of the user, mobile station 10 makes a call to email server 25, and transmits a request for email receipts, which contains the email address of mobile station 10 (step S11).

Email server 25 receives the request for email receipts from mobile station 10 (step S12).

Then, email server 25 extracts email receipts from a memory area of memory 254b, which corresponds to the received email address (step S13), and email server 25 transmits the email receipts to mobile station 10 (step S14).

Mobile station 10 receives the email receipts from email server 25 (step S15), displays the email receipts in the liquid crystal display unit, and ends the series of operations (step S16).

As explained above, according to the first embodiment, users can obtain email receipts at their convenient timings separately from ordinary emails.

Therefore, the system can meet its users' demand to receive several email receipts all together at the same time, more flexibly.

### B: The Second Embodiment

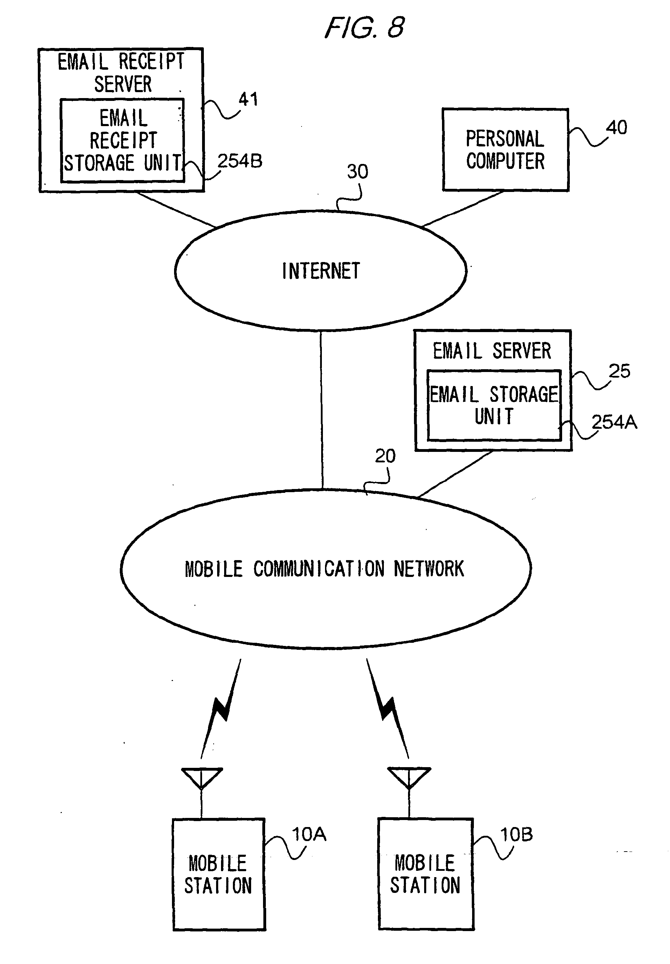

Next, the second embodiment of the present invention will be explained. As described in the above-mentioned first embodiment, email sever 25 comprises email receipt storage unit 254b. In the second embodiment, however, a certain server in Internet 30 comprises email receipt storage unit 254b. Fig.8 is a block diagram showing the overall configuration of a system according to the second embodiment. In Fig.8, the components, which are the same as those in the first embodiment, are provided with the same symbols as in the first embodiment, and therefore, configuration explanations of those components are omitted.

The second embodiment and the first embodiment differ in their configuration of email server 25; as well as, in the existence of email receipt server 41 in Internet 30 which concentrates on providing storage and distribution services of email receipts. Email server 25 comprises email storage unit 254a as explained above, but it does not comprise email receipt storage unit 254b, and it does not provide email receipt distribution service, unlike in the first embodiment. In the second embodiment, on the other hand, email receipt server 41 comprises email receipt storage unit 254b, and provides email receipt distribution service instead of email server 25. To be more precise, email receipt server 41 comprises a communication unit (not shown) for executing data communication through Internet 30, a control unit (not shown) for controlling each component of email receipt server 41, email receipt storage unit 254b for storing data of email receipts, and a bus (not shown) for interconnecting these units.

Users of mobile stations 10 have a distribution service contract with email receipt server 41, which provides the distribution service of email receipts, and mobile station 10 stores in ROM 122 an Internet Protocol (IP) address of email receipt server 41 for using the distribution service.

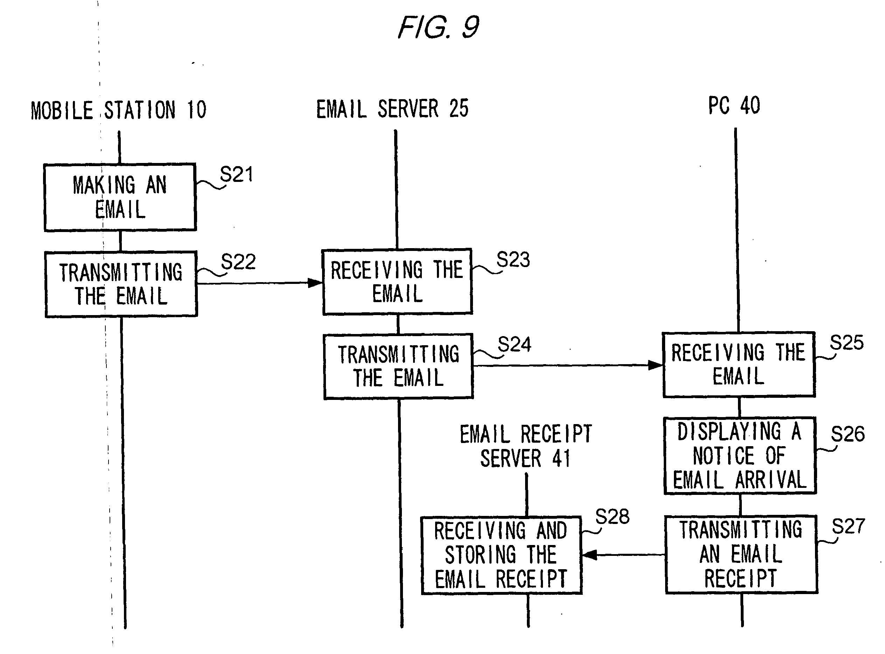

A series of operations, executed when mobile station 10 transmits an email to PC 40, and another series of operations, executed when mobile station 10 receives an email receipt corresponding to the email, are examples of operations in the second embodiment, which are explained below. As shown in the sequence chart of Fig.9, first, a user of mobile station 10 operates the keypad of mobile station 10 and starts a mailer program. Then, the user operates the keypad and composes an email, which is addressed to the email address of PC 40. Mobile station 10 makes an email following the key operation of the user (step S21).

Next, mobile station 10 makes a call to email server 25 following the user's request for transmitting the composed email, and transmits the email, which is addressed to PC 40, to email server 25 (step S22). When mobile station 10 transmits the email, mobile station 10 reads out the IP address of email receipt server 41 stored in ROM 122 and attaches the IP address to the composed email so that an email receipt corresponding to the composed email can reach email receipt server 41.

Email server 25 receives the email from mobile station 10 (step S23), and transmits the email to PC 40 through mobile communication network 20 and Internet 30 (step S24).

PC 40 receives the email from email server 25 (step S25), and displays a notice of email arrival in the display unit (not shown) to indicate that an email has arrived (step S26).

Next, when the user of PC 40 makes a request for receiving the email, PC 40 receives the email following the request and displays the email in the display unit. Then, PC 40 transmits an email receipt to email receipt server 41 using the IP address of email receipt server 41, which is attached to the email (step S27). When PC 40 transmits the email receipt, PC 40 attaches the email address of mobile station 10 to the email receipt.

When email receipt server 41 receives the email receipt and the email address of mobile station 10, it stores the email receipt in a memory area in memory 254b according to the email address of mobile station 10, and ends the series of operations (step S28).

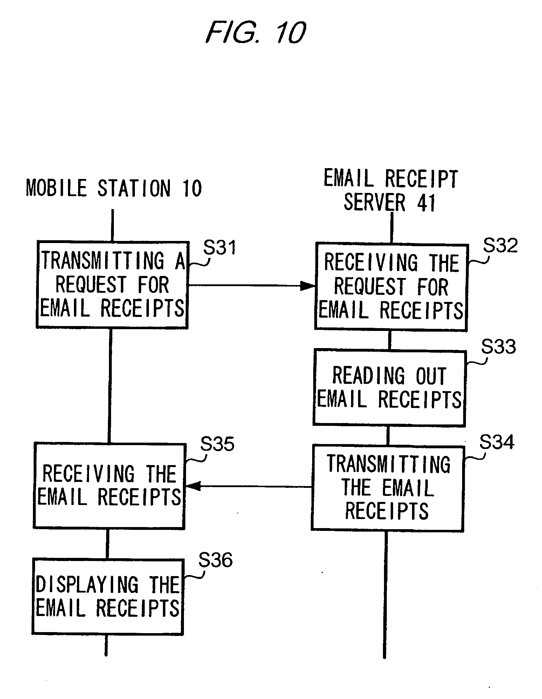

Next, another series of operations, which are executed when mobile station 10 downloads email receipts from email receipt server 41, are explained below with reference to the sequence chart in Fig.10. First, a user of mobile station 10 operates mobile station 10 to start a mailer program and to download email receipts. Following the keypad operation of the user, mobile station 10 establishes a communication connection with email receipt server 41 through mobile communication network 20 and Internet 30, and transmits a request for email receipts with the email address of mobile station 10 to email receipt server 41 (step S31).

Email receipt server 41 receives the request for email receipts (step S32). Then, email receipt server 41 reads out email receipts from a memory area of memory 254b, which corresponds to the received email address (step S33), and transmits the email receipts to mobile station 10 through Internet 30 and mobile communication network 20 (step S34).

The email receipts are relayed by email server 25, and they are received by mobile station 10 (step S35).

When mobile station 10 receives the email receipts, mobile station 10 displays them in the liquid crystal display unit, and ends the series of operations (step S36).

As explained above, according to the second embodiment, users can also obtain email receipts at their convenience and independently of ordinary emails as in the first embodiment.

Email clients, who use distribution service of email receipts provided by email receipt server 41, are not limited to mobile stations 10, and they may be email clients who are connected to Internet 30 such as PC 40. Namely any email client who is able to connect to Internet 30 can use the distribution service of email receipt server 41 by making a contract for the distribution service, and the client can obtain email receipts at the client's convenience no matter what kind of server performs the distribution service of ordinary emails for the email client. Therefore, email receipt server 41 functions as a site where the distribution service of email receipts is provided, and an administrator of email receipt server 41 can concentrate on the distribution service of email receipts.

### C: Modification

The embodiments mentioned above should not be interpreted as limiting the scope of the present invention, and the present invention can be embodied in various forms within its technical scope. Following are examples of some of the modified forms of the present invention.

### (1) Variation of email clients

In the first and second embodiments, email clients in mobile communication network 20 are mobile stations 10 such as mobile phones and PHSs. However, email clients of the present invention are not limited to mobile stations, but any information device, which is connected to mobile stations 10, such as Personal Digital Assistant (PDA) or a personal computer, may function as an email client of the present invention.

Moreover, in the embodiments explained above, only email receipts, which correspond to emails transmitted from mobile stations 10 to PC 40, are described. However, email receipts of the present invention do not necessarily correspond to those emails, but they correspond to emails communicated between mobile stations 10 in mobile communication network 20 or between PC 40 and another PC, which is not shown in the figures.

### (2) Variation of transmitting timings of ordinary emails from an email server to an email client

In the first and second embodiments, when email server 25 receives an ordinary email addressed to mobile station 10, email server 25 transmits the ordinary email immediately, while at the same time storing the email temporarily.

However, there is another method of email transmission, where an email client sends requests for emails to email server 25 periodically and automatically without the need for an input operation each time, and email server 25 distributes emails to the email client in response to the requests. When the email client is PC 40, for example, this transmission method is often adopted. In a system using such a method, users of mobile stations, which are the email clients, do not have to carry out transmission operation for requests for emails either.

The email transmission method explained above, in which email server 25 transmits emails in response to periodical requests for email receipts transmitted by email clients, can also be applied to the present invention

### (3) Variation of method for transmitting email receipts from an email server to an email client

In the first embodiment, email receipts from email server 25 to mobile stations 10 are made in an email format, but formats for email receipts of the present invention are not limited to the email format.

For example, if a World Wide Web (WWW) browser program is installed in mobile station 10, mobile station 10 can read out email receipts, which are stored in email server 25 using the browser program.

Even in such a case, as in the first embodiment, PC 40, which receives emails from mobile station 10, transmits email receipts to email server 25 in the email format. However, email server 25, which receives the email receipts in the email format, stores in its memory, the email addresses contained in the email receipts, the email addresses of receivers of corresponding emails, the times and dates of receipts of the corresponding emails, and the titles of the corresponding emails (namely data stored in email receipt storage unit 254b) in the Hyper Text Markup Language (HTML) format.

A series of operations executed when email server 25 provides email receipts to mobile station 10 are described below.

First, mobile station 10 starts a browser program following its user's operation, and connects to email server 25 using a Uniform Resource Locator (URL), which is allotted to email server 25 in advance. Email server 25 reads out HTML data containing data of email receipts, which are addressed to mobile station 10, from its memory, and transmits the data to mobile station 10. Mobile station 10 receives and interprets the HTML data and displays the data in its liquid crystal display.

In the second embodiment as well, email receipt server 41 can adopt the above-mentioned method for providing email receipts using a browser program.

### (4) Variation of transmission method of email receipts between email servers

In the first embodiment, the explanation focuses on the operations of email server 25, which provides email service to mobile stations 10; but the explanation does not include a description of the configuration and operations of the email server, (referred to as 'email server 100' hereinafter), which provides email service to PC 40.

In the instance that there is no need for users of mobile stations 10 to always receive email receipts immediately, it is also possible to apply the below described method for transmitting email receipts between email server 25 and email server 100.

In the instance that email server 100 transmits email receipts received from PC 40, to email server 25, email server 100 does not transmit the email receipts to email server 25 immediately after it receives them from PC 40, but instead stores the email receipts transmitted from several PCs 40 until a predetermined transmitting time. When it is time for transmitting the email receipts, email server 100 transmits the email receipts collectively to email server 25. In a conventional system, it is common that control signals for detecting communication connections are periodically transmitted and received between email servers. In such a system, data of email receipts, which are stored in servers, can be attached to the control signals and transmitted along with the control signals.

In the system explained above, the efficiency of network communication between email server 25 and email server 100 can be improved.

Moreover, also in the second embodiment email receipt server 41 can adopt the above-mentioned method for transmitting email receipts.

## Claims

1. An email system, said system comprising:
a plurality of mobile stations (10A, 10B), which are arranged to transmit and receive emails and which are arranged to be connected to a cellular mobile communication network;
a first storage means (254a), which is arranged to stores emails addressed to said mobile stations (10A, 10B);
a second storage means (254b), which is arranged to stores information concerning email receipts addressed to said mobile stations (10A, 10B);
a receiving means (252) which is arranged to receive distinction data to distinguish emails from email receipts, wherein if the distinction data shows emails, the received email is stored in the first storage means (254a), if the distinction data shows email receipts, the received email receipts is stored in the second storage means (254b);
an email transmitting means (252), which is arranged to transmit by push type distribution said emails stored in said first storage means (254a) to said mobile stations (10A, 10B), and;
an email receipt transmitting means (252), which is arranged to transmits by pull type distribution said information concerning said email receipts stored in said second storage means (254b) to said mobile stations (10A, 10B), in response to requests which are transmitted by said mobile stations (10A, 10B) following operations carried out by users.

2. An email system according to claim 1, wherein:
said email receipt transmitting means is arranged to transmit said information concerning said email receipts in an email format to said mobile stations (10A, 10B).

3. An email system according to claim 1, wherein:
said email receipt transmitting means is arranged to transmit said information concerning said email receipts in a data format that can be interpreted by a browser program stored by said mobile stations (10A, 10B).

4. An email system according to claim 1, wherein:
said second storage means and said email receipt transmitting means are installed in a server (25), which is equipped with said first storage means (254a) and said email transmitting means (252) to provide a service of email distribution through a communication network to which said mobile stations (10A, 10B) are connected.

5. An email system according to claim 1, wherein:
said email transmitting means is arranged to transmit said emails to recipient mobile stations which are recipients of said emails through said mobile communication network, and;
said email receipt transmitting means is arranged to transmit said information concerning said email receipts to transmitter mobile stations which are transmitters of said emails through said mobile communication network.

6. An email system according to claim 1, wherein:
said first storage means (254a) and said email transmitting means are installed in an email server (25), which provides a service of email distribution through a first communication network to which said mobile stations (10A, 10B) are connected, and;
said second storage means (254b) and said email receipt transmitting means are installed in an email receipt server (41) connected to a second communication network (30), which is different from said first communication network.

7. An email system according to claim 6, wherein:
said first communication network is said mobile communication network; and
said email transmitting means is arranged to transmit said emails to said mobile stations (10A, 10B) through said mobile communication network (20).

8. An email system according to claim 6, wherein:
said second communication network (30) is the Internet, and;
said email receipt transmitting means is arranged to transmit said information concerning said email receipts to said mobile stations (10A, 10B) through the Internet.

9. An email system according to claim 6, wherein:
said first communication network is said mobile communication network;
said second communication network (30) is the Internet;
said email transmitting means is arranged to transmit said emails to said mobile stations (10A, 10B) through said mobile communication network (30), and;
said email receipt transmitting means is arranged to transmits said information concerning said email receipts to said mobile stations (10A, 10B) through the Internet.

10. An email system according to claim 6, wherein:
each of said mobile stations (10A, 10B) comprises a means arranged to indicate an address of said email receipt server in said second communication network (30) as a destination address for email receipts corresponding to emails, which each of said mobile stations (10A, 10B) transmits.

11. A server for relaying communications of emails transmitted and received between mobile stations (10A, 10B) which are arranged to be connected to a cellular mobile communication network, said server comprising:
a receiving means, which is arranged to receive email receipts addressed to said mobile stations (10A, 10B);
a first storage means (254a), which is arranged to store emails addressed to said mobile stations (10A, 10B);
a second storage means (254b), which is arranged to store information concerning said email receipts which are received, with correspondence to identification information of each of said mobile stations (10A, 10B);
a receiving means (252) which is arranged to receive distinction data to distinguish emails from email receipts, wherein if the distinction data shows emails, the received email is stored in the first storage means (254a), if the distinction data shows email receipts, the received email receipts is stored in the second storage means (254b);
an extracting means, which is arranged to extract said information concerning said email receipts stored by said second storage means (254b) according to said identification information, in response to requests which are transmitted by said mobile stations (10A, 10B) following operations carried out by users of said mobile stations (10A, 10B), and;
an email receipt transmitting means, which is arranged to transmit said information concerning said email receipts extracted by said extracting means, to said mobile stations (10A, 10B).

12. A server according to claim 11, wherein:
said email receipt transmitting means is arranged to transmit said information concerning said email receipts in an email format to said mobile stations (10A, 10B).

13. A server according to claim 11, wherein:
said email receipt transmitting means is arranged to transmit said information concerning said email receipts in a data format that can be interpreted by a browser program stored by said mobile stations (10A, 10B), to said mobile stations (10A, 10B).

14. A server according to claim 11, wherein:
said email receipt transmitting means is arranged to transmit said information concerning said email receipts to said mobile stations (10A, 10B) through said mobile communication network.

## Patentansprüche

1. E-mail-System, wobei das System umfasst:
eine Vielzahl von Mobilstationen (10A, 10B), die ausgelegt sind zum Übertragen und Empfangen von E-mails, und die ausgelegt sind, um mit einem zellulären Mobilkommunikationsnetz verbunden zu werden;
ein erstes Speichermittel (254a), das ausgelegt ist zum Speichern von E-mails, die an die Mobilstationen (10A, 10B) adressiert sind;
ein zweites Speichermittel (254b), das ausgelegt ist zum Speichern von Informationen in Bezug auf E-mail-Empfangsbestätigungen, die an die Mobilstationen (10A, 10B) adressiert sind;
ein Empfangsmittel (252), das ausgelegt ist zum Empfangen von Unterscheidungsdaten zum Unterscheiden von E-mails von E-mail-Eingängen, wobei, wenn die Unterscheidungsdaten E-mails anzeigen, die empfangene E-mail in dem ersten Speichermittel (254a) gespeichert wird, und wenn die Unterscheidungsdaten E-mail-Empfangsbestätigungen anzeigen, die empfangenen E-mail-Empfangsbestätigungen in dem zweiten Speichermittel (254b) gespeichert werden;
ein E-mail-Übertragungsmittel (252), das ausgelegt ist zum Übertragen, durch eine Push-artige Verteilung, der in dem ersten Speichermittel (254a) gespeicherten E-mails and die Mobilstationen (10A, 10B), und
ein E-mail-Empfangsbestätigungen-Übertragungsmittel (252), das ausgelegt ist zum Übertragen, durch eine Pull-artige Verteilung, der Informationen in Bezug auf die E-mail-Empfangsbestätigungen, die in dem zweiten Speichermittel (254b) gespeichert sind, an die Mobilstationen (10A, 10B), als Antwort auf Anforderungen, die durch die Mobilstationen (10A, 10B) übertragen werden, folgend auf Operationen, die durch Nutzer ausgeführt werden.

2. E-mail-System nach Anspruch 1, wobei:
das E-mail-Empfangsbestätigungen-Übertragungsmittel ausgelegt ist zum Übertragen der Informationen in Bezug auf die E-mail-Empfangsbestätigungen an die Mobilstationen (10A, 10B) in einem E-mail-Format.

3. E-mail-System nach Anspruch 1, wobei:
das E-mail-Empfangsbestätigungen-Übertragungsmittel ausgelegt ist zum Übertragen der Informationen in Bezug auf die E-mail-Empfangsbestätigungen in einem Datenformat, welches durch ein Browser-Programm interpretiert werden kann, das durch die Mobilstationen (10A, 10B) gespeichert ist.

4. E-mail-System nach Anspruch 1, wobei:
das zweite Speichermittel und das E-mail-Empfangsbestätigungen-Übertragungsmittel in einem Server (25) installiert sind, der mit dem ersten Speichermittel (254a) und dem E-mail-Übertragungsmittel (252) ausgestattet ist, um einen Dienst der E-mail-Verteilung über ein Kommunikationsnetz bereitzustellen, mit dem die Mobilstationen (10A, 10B) verbunden sind.

5. E-mail-System nach Anspruch 1, wobei:
das E-mail-Übertragungsmittel ausgelegt ist zum Übertragen der E-mails an Empfangsmobilstationen, die Empfänger der E-mails über das Mobilkommunikationsnetz sind, und
das E-mail-Empfangsbestätigungen-Übertragungsmittel ausgelegt ist zum Übertragen der Informationen in Bezug auf die E-mail-Empfangsbestätigungen an Übertragungsmobilstationen, die Überträger der E-mails über das Mobilkommunikationsnetz sind.

6. E-mail-System nach Anspruch 1, wobei:
das erste Speichermittel (254a) und das E-mail-Übertragungsmittel in einem E-mail-Server (25) installiert sind, der einen Dienst zum E-mail-Verteilen über ein erstes Kommunikationsnetz bereitstellt, mit dem die Mobilstationen (10A, 10B) verbunden sind, und
das zweite Speichermittel (254b) und das E-mail-Empfangsbestätigungen-Übertragungsmittel in einem E-mail-Empfangsbestätigungen-Server (41) installiert sind, der mit einem zweiten Kommunikationsnetz (30) verbunden ist, der sich von dem ersten Kommunikationsnetz unterscheidet.

7. E-mail-System nach Anspruch 6, wobei:
das erste Kommunikationsnetz das Mobilkommunikationsnetz ist;
das E-mail-Übertragungsmittel ausgelegt ist, die E-mails über das Mobilkommunikationsnetz (20) an die Mobilstationen (10A, 10B) zu übertragen.

8. E-mail-System nach Anspruch 6, wobei:
das zweite Kommunikationsnetz (30) das Internet ist, und
das E-mail-Empfangsbestätigungen-Übertragungsmittel ausgelegt ist, die Informationen in Bezug auf die E-mail-Empfangsbestätigungen über das Internet an die Mobilstationen (10A, 10B) zu übertragen.

9. E-mail-System nach Anspruch 6, wobei:
das erste Kommunikationsnetz das Mobilkommunikationsnetz ist;
das zweite Kommunikationsnetz (30) das Internet ist;
das E-mail-Übertragungsmittel ausgelegt ist zum Übertragen der E-mails an die Moblstationen (10A, 10B) über das Mobilkommunikationsnetz (30), und
das E-mail-Empfangsbestätigungen-Übertragungsmittel ausgelegt ist zum Übertragen der Informationen in Bezug auf die E-mail-Empfangsbestätigungen an die Mobilstationen (10A, 10B) durch das Internet.

10. E-mail-System nach Anspruch 6, wobei:
jede der Mobilstationen (10A, 10B) ein Mittel umfasst, das ausgelegt ist zum Anzeigen einer Adresse des E-mail-Empfangsbestätigungenservers in dem zweiten Kommunikationsnetz (30) als eine Zieladresse für E-mail-Empfangsbestätigungen, die mit den E-mails zusammenhängen, die jede der Mobilstationen (10A, 10B) überträgt.

11. Server zum Weiterleiten von E-mail-Kommunikationen, die zwischen Mobilstationen (10A, 10B) übertragen und empfangen werden, die ausgelegt sind, um mit einem zellulären Mobilkommunikationsnetz verbunden zu werden, wobei der Server umfasst:
ein Empfangsmittel, das ausgelegt ist zum Empfangen von E-mail-Empfangsbestätigungen, die an die Mobilstationen (10A, 10B) adressiert sind;
ein erstes Speichermittel (254a), das ausgelegt ist zum Speichern von E-mails, die an die Mobilstationen (10A, 10B) adressiert sind;
ein zweites Speichermittel (254b), das ausgelegt ist zum Speichern von Informationen in Bezug auf E-mail-Empfangsbestätigungen, die empfangen werden, im Zusammenhang mit Identifikationsinformationen von jedem der Mobilstationen (10A, 10B),
ein Empfangsmittel (252), das ausgelegt ist zum Empfangen von Unterscheidungsdaten zum Unterscheiden von E-mails von E-mail-Empfangsbestätigungen, wobei, wenn die Unterscheidungsdaten E-mails anzeigen, die empfangene E-mail in dem ersten Speichermittel (254a) gespeichert wird, und wenn die Unterscheidungsdaten E-mail-Empfangsbestätigungen anzeigen, die empfangenen E-mail-Empfangsbestätigungen in dem zweiten Speichermittel (254b) gespeichert werden;
ein Extrahierungsmittel, das ausgelegt ist zum Extrahieren der Informationen in Bezug auf die E-mail-Empfangsbestätigungen, die in dem zweiten Speichermittel (254b) gespeichert sind, gemäß den Identifikationsinformationen, als Antwort auf Anforderungen, die durch die Mobilstationen (10A, 10B) übertragen werden, Operationen folgend, die durch Nutzer der Mobilstationen (10A, 10B) ausgeführt werden, und
ein E-mail-Empfangsbestätigungen-Übertragungsmittel (252), das ausgelegt zum Übertragen der Informationen in Bezug auf die durch das Extrahierungsmittel extrahierten E-mail-Empfangsbestätigungen an die Mobilstationen (10A, 10B).

12. Server nach Anspruch 11, wobei:
das E-mail-Empfangsbestätigungen-Übertragungsmittel ausgelegt ist zum Übertragen der Informationen in Bezug auf die E-mail-Empfangsbestätigungen in einem E-mail-Format an die Mobilstationen (10A, 10B).

13. Server nach Anspruch 11, wobei:
das E-mail-Empfangsbestätigungen-Übertragungsmittel ausgelegt ist zum Übertragen der Informationen in Bezug auf die E-mail-Empfangsbestätigungen in einem Datenformat, welches durch ein Browser-Programm interpretiert werden kann, das durch die Mobilstationen (10A, 10B) gespeichert wird, an die Mobilstationen (10A, 10B).

14. Server nach Anspruch 11, wobei:
das E-mail-Empfangsbestätigungen-Übertragungsmittel ausgelegt ist zum Übertragen der Informationen in Bezug auf die E-mail-Empfangsbestätigungen über das Mobilkommunikationsnetz an die Mobilstationen (10A, 10B).

## Revendications

1. Système de courrier électronique, ledit système comprenant :
une pluralité de stations mobiles (10A, 10B), qui sont agencées pour transmettre et recevoir des courriers électroniques et qui sont agencées de manière à ce qu'elles soient reliées à un réseau de communication mobile cellulaire ;
un premier moyen (254a) de stockage, qui est agencé pour stocker des courriers électroniques adressés auxdites stations mobiles (10A, 10B) ;
un deuxième moyen (254b) de stockage, qui est agencé pour stocker des informations concernant des accusés de réception de courriers électroniques adressés auxdites stations mobiles (10A, 10B) ;
un moyen (252) de réception qui est agencé pour recevoir des données de distinction afin de distinguer les courriers électroniques des accusés de réception de courriers électroniques, où si les données de distinction montre qu'il s'agit de courriers électroniques, le courrier électronique reçu est stocké dans le premier moyen (254a) de stockage, si les données de distinction montre qu'il s'agit d'accusés de réception de courriers électroniques, l'accusé de réception de courrier électronique reçu est stocké dans le deuxième moyen (254b) de stockage ;
un moyen (252) de transmission de courriers électroniques, qui est agencé pour transmettre par une distribution de type push lesdits courriers électroniques stockés dans ledit premier moyen (254a) de stockage auxdites stations mobiles (10A, 10B), et ;
un moyen (252) de transmission des accusés de réception de courriers électroniques, qui est agencé pour transmettre par une distribution de type pull lesdites informations concernant lesdits accusés de réception de courriers électroniques stockés dans ledit deuxième moyen (254b) de stockage auxdites stations mobiles (10A, 10B), en réponse aux demandes qui sont transmises par lesdites stations mobiles (10A, 10B) après des opérations effectuées par des utilisateurs.

2. Système de courrier électronique selon la revendication 1, dans lequel :
ledit moyen de transmission des accusés de réception de courriers électroniques est agencé pour transmettre lesdites informations concernant lesdits accusés de réception de courriers électroniques dans un format de courrier électronique auxdites stations mobiles (10A, 10B).

3. Système de courrier électronique selon la revendication 1, dans lequel :
ledit moyen de transmission des accusés de réception de courriers électroniques est agencé pour transmettre lesdites informations concernant lesdits accusés de réception de courriers électroniques dans un format de données qui peut être interprété par un programme de navigateur stocké par lesdites stations mobiles (10A, 10B).

4. Système de courrier électronique selon la revendication 1, dans lequel :
ledit deuxième moyen de stockage et ledit moyen de transmission des accusés de réception de courriers électroniques sont installés dans un serveur (25), qui est équipé dudit premier moyen (254a) de stockage et dudit moyen (252) de transmission de courriers électroniques pour fournir un service de distribution de courriers électroniques à travers un réseau de communication auquel lesdites stations mobiles (10A, 10B) sont reliées.

5. Système de courrier électronique selon la revendication 1, dans lequel :
ledit moyen de transmission de courriers électroniques est agencé pour transmettre lesdits courriers électroniques à des stations mobiles destinataires qui sont destinataires desdits courriers électroniques à travers ledit réseau de communication mobile, et ;
ledit moyen de transmission des accusés de réception de courriers électroniques est agencé pour transmettre lesdites informations concernant lesdits accusés de réception de courriers électroniques à des stations mobiles émettrices qui sont émettrices desdits courriers électroniques à travers ledit réseau de communication mobile.

6. Système de courrier électronique selon la revendication 1, dans lequel :
ledit premier moyen (254a) de stockage et ledit moyen de transmission de courriers électroniques sont installés dans un serveur (25) de courriers électroniques, qui fournit un service de distribution de courriers électroniques à travers un premier réseau de communication auquel lesdites stations mobiles (10A, 10B) sont reliées, et ;
ledit deuxième moyen (254b) de stockage et ledit moyen de transmission des accusés de réception de courriers électroniques sont installés dans un serveur (41) des accusés de réception de courriers électroniques relié à un deuxième réseau de communication (30), qui est différent dudit premier réseau de communication.

7. Système de courrier électronique selon la revendication 6, dans lequel :
ledit premier réseau de communication est ledit réseau de communication mobile ;
ledit moyen de transmission de courriers électroniques est agencé pour transmettre lesdits courriers électroniques auxdites stations mobiles (10A, 10B) à travers ledit réseau de communication mobile (20).

8. Système de courrier électronique selon la revendication 6, dans lequel :
ledit deuxième réseau de communication (30) est l'Internet, et ;
ledit moyen de transmission des accusés de réception de courriers électroniques est agencé pour transmettre lesdites informations concernant lesdits accusés de réception de courriers électroniques auxdites stations mobiles (10A, 10B) par l'Internet.

9. Système de courrier électronique selon la revendication 6, dans lequel :
ledit premier réseau de communication est ledit réseau de communication mobile ;
ledit deuxième réseau de communication (30) est l'Internet ;
ledit moyen de transmission de courriers électroniques est agencé pour transmettre lesdits courriers électroniques auxdites stations mobiles (10A, 10B) à travers ledit réseau de communication mobile (30), et ;
ledit moyen de transmission des accusés de réception de courriers électroniques est agencé pour transmettre lesdites informations concernant lesdits accusés de réception de courriers électroniques auxdites stations mobiles (10A, 10B) par l'Internet.

10. Système de courrier électronique selon la revendication 6, dans lequel :
chacune desdites stations mobiles (10A, 10B) comprend un moyen agencé pour indiquer une adresse dudit serveur des accusés de réception de courriers électroniques dans ledit deuxième réseau (30) de communication comme étant une adresse de destination pour des accusés de réception de courriers électroniques correspondant aux courriers électroniques, que chacune desdites stations mobiles (10A, 10B) transmet.

11. Serveur destiné à relayer des communications de courriers électroniques transmis et reçus entre des stations mobiles (10A, 10B) qui sont agencées de manière à ce qu'elles soient reliées à un réseau de communication mobile cellulaire, ledit serveur comprenant :
un moyen de réception, qui est agencé pour recevoir des accusés de réception de courriers électroniques adressés auxdites stations mobiles (10A, 10B) ;
un premier moyen (254a) de stockage, qui est agencé pour stocker des courriers électroniques adressés auxdites stations mobiles (10A, 10B) ;
un deuxième moyen (254b) de stockage, qui est agencé pour stocker des informations concernant lesdits accusés de réception de courriers électroniques qui sont reçus, avec correspondance aux informations d'identification de chacune desdites stations mobiles (10A, 10B) ;
un moyen (252) de réception qui est agencé pour recevoir des données de distinction afin de distinguer les courriers électroniques des accusés de réception de courriers électroniques, où si les données de distinction montre qu'il s'agit de courriers électroniques, le courrier électronique reçu est stocké dans le premier moyen (254a) de stockage, si les données de distinction montre qu'il s'agit des accusés de réception de courriers électroniques, l'accusé de réception de courrier électronique reçu est stocké dans le deuxième moyen (254b) de stockage ;
un moyen d'extraction, qui est agencé pour extraire lesdites informations concernant lesdits accusés de réception de courriers électroniques stockés par ledit deuxième moyen de stockage (254b) selon lesdites informations d'identification, en réponse aux demandes qui sont transmises par lesdites stations mobiles (10A, 10B) après des opérations effectuées par les utilisateurs desdites stations mobiles (10A, 10B), et ;
un moyen de transmission des accusés de réception de courriers électroniques, qui est agencé pour transmettre lesdites informations concernant lesdits accusés de réception de courriers électroniques extraites par ledit moyen d'extraction, auxdites stations mobiles (10A, 10B).

12. Serveur selon la revendication 11, dans lequel :
ledit moyen de transmission des accusés de réception de courriers électroniques est agencé pour transmettre lesdites informations concernant lesdits accusés de réception de courriers électroniques dans un format de courrier électronique auxdites stations mobiles (10A, 10B).

13. Serveur selon la revendication 11, dans lequel :
ledit moyen de transmission des accusés de réception de courriers électroniques est agencé pour transmettre lesdites informations concernant lesdits accusés de réception de courriers électroniques dans un format de données qui peut être interprété par un programme de navigateur enregistré par lesdites stations mobiles (10A, 10B), auxdites stations mobiles (10A, 10B).

14. Serveur selon la revendication 11, dans lequel :
ledit moyen de transmission des accusés de réception de courriers électroniques est agencé pour transmettre lesdites informations concernant lesdits accusés de réception de courriers électroniques auxdites stations mobiles (10A, 10B) à travers ledit réseau de communication mobile.
